# EUROPEAN PATENT APPLICATION

(11) **EP 1 460 592 A1**
(43) Date of publication of application: **22.09.2004**
(21) Application number: 02777818.2
(22) Date of filing: 09.10.2002
(51) Int. Cl.: G07F 7/08, G06F 17/60, H04M 15/00

(54) **PREPAID CARD INFORMATION ISSUING SYSTEM, CALL RATE SETTLEMENT SYSTEM, COMMUNICATION RATE SETTLEMENT SYSTEM, AND EXPENSE SETTLEMENT SYSTEM**

(30) Priority: 27.11.2001 JP 2001361236
(71) Applicant: Great Information Co., Ltd., Tokyo 163-6035 (JP)
(72) Inventor: KUNUGI, Takanobu, Tokorozawa-shi, Saitama 359-0024 (JP); KUNUGI, Yurako, Tokorozawa-shi, Saitama 359-0024 (JP)
(74) Representative: Klunker . Schmitt-Nilson . Hirsch
(86) International application number: PCT/JP2002/010486
(87) International publication number: WO 2003/046849

(57) **Abstract**

A prepaid card information issuing system 10 comprising a character string data base 25 for storing a plurality of character strings each consisting of a predetermined number of digits, a selection sheet 32 on which barcodes 35, 36 for identifying the type and face value of a prepaid card are displayed, a barcode reader 15a for reading out the barcodes 35, 36 to input the type and face value of the prepaid card, paid amount of money input means for inputting the amount of cash paid, prepaid card information generator 22 for generating prepaid card information by associating some character string in the character string data base 25 with the face value concerned when the face value of the prepaid card thus selected is coincident with the paid money amount, a prepaid card information data base 26 for storing prepaid card information, and prepaid card information issuing means 31.

## Description

### TECHNICAL FIELD

The present invention relates to an issuing system for prepaid card information containing a character string of a predetermined number of digits which is added with a fixed monetary value.

Furthermore, the present invention relates to a system for performing a call rate settlement, a communication rate settlement and goods/services expense settlement by using such prepaid card information.

### BACKGROUND ART

At present, when an international call is made overseas from a mobile telephone terminal such as a cellular phone, PHS or the like, it is a general rule to have a use contract with an international communication business enterprise in advance. That is, the name, address, contact address, payment method, etc. of a user are filled in "APPLICATION FORM OF CELLULAR PHONE/PHS INTERNATIONAL USE CONTRACT", and then it is submitted to the international communication business enterprise. At this time, a person having a credit card can select "payment on credit". However, a person having no credit must go to the international communication business enterprise, or be examined on a letter or the like and then select "bill payment" needing payment of guarantee money. Therefore, it takes some time to give approval.

In the case of a mobile telephone terminal, the telephone terminal is literally movable and thus it is difficult to specify the location of a user. Therefore, it is the actual situation that a strict procedure must be imposed on the user to prevent bilking of a call rate.

Furthermore, there is a method of using a prepaid card exclusively used for international telephone. In this case, a user can make an overseas call within a call frequency range by inputting a card number (a character string of a predetermined number of digits) filled on a prepaid card from a cellular phone or the like before inputting "country number + long-distance number (area code/area number) + telephone number of call partner (area code + subscriber's number)"at the call-reception side.

Such a prepaid card as described above is issued by each international communication business enterprise for supplying international communication services, and sold at convenience stores, etc.

With respect to this prepaid card, it is set so that telephone calls can be made within only the amount of money paid in advance, and thus there is no risk that the charge for calls becomes irrecoverable. Therefore, it is unnecessary to impose a cumbersome proceeding of entering into a contract in advance or paying guarantee money, and thus this is matched with the needs of temporarily staying foreigners or young people who want to make overseas calls simply.

However, this brings each international communication business enterprise side with such a problem that not only it takes a cost to prepare prepaid cards themselves, but also transportation and storage of cards worthy of cash vouchers induce a large risk and need a high cost.

In the case of prepaid cards for international calls, it is not general that a card itself is inserted through a card reader to settle/display money like a telephone card available to a public phone, but it is general that a card number displayed on the card is input from a dial/buttons of a cellular phone to enable the telephone calls corresponding to the amount of money allocated to the card number concerned in advance.

That is, with respect to the prepaid cards for international calls, the cards themselves are merely used as carriers for prepaid card information, and the prepaid card information itself which is displayed on the cards has important significance. Accordingly, the cards may be merely paper pieces, however, in order to prevent abuse in a distribution process, it is necessary to subject the cards to special processing of covering up an information display portion of a character string. Furthermore, in order to prevent damage in the distribution process, it is necessary to provide some degree of strength to the cards, and this causes rise-up of the cost.

Furthermore, following popularization of the Internet, various on-line services (Internet connection services, Net shopping, Net auctions, Net games, download services of digital contents, etc.) have been recently popular, and there has been an increasing tendency in use of prepaid card information (so-called Web money) as settlement means of commercial transactions on the Net. In this case, however, the same problem as described above, that is, the cost-up in preparation of the prepaid cards themselves and the risk of suffering theft in the distribution process are indicated.

The present invention has been proposed to solve the above problem of the prior art, and has an object to provide a prepaid card information issuing system with which the risk of theft in the distribution process can be completely avoided and reduction of an issuance cost can be also performed.

Furthermore, the present invention has an object to establish a system for settling various kinds of charges without any risk of occurrence of dead loan, by applying the above prepaid card information issuing system.

### DISCLOSURE OF THE INVENTION

In order to attain the above object, a prepaid card information issuing system according to claim 1 is characterized by comprising: character string storage means for storing a plurality of character strings each consisting of a predetermined number of digits; a selection sheet having bar codes for identifying the type and face value of a prepaid card; a bar code reader for reading the bar codes and inputting the type and face value of the prepaid card; paid money inputting means for inputting the amount of paid cash money; means for generating prepaid card information while some character string in the character string storage means and the face value are associated with each other when the face value of a prepaid card selected and the amount of paid money are coincident with each other; prepaid card information storage means for storing the prepaid card information; and means (printer or display) for outputting the prepaid card information.

A prepaid card information issuing system according to claim 2 is characterized by comprising: character string storage means for storing a plurality of character strings each consisting of a predetermined number of digits; a selection sheet having bar codes for identifying the type and face value of a prepaid card; a bar code reader for reading the bar codes and inputting the type and face value of the prepaid card; credit card information inputting means for inputting information concerning a credit card; means for transmitting the credit card information and the face value of the prepaid card to an external computer system to request a settlement based on the credit card, and checking whether the settlement based on the credit card has been completed; means for generating prepaid card information while some character string in the character string storage means and the face value are associated with each other when the settlement based on the credit card has been completed; prepaid card information storage means for storing the prepaid card information; and means for outputting the prepaid card information.

As described above, a prepaid card is not distributed while a character string associated with face value information in advance is displayed on the prepaid card, but a character string and face value information are associated with each other and set as prepaid card information at the time point when the payment of cash money or the settlement based on the credit card is confirmed and then the prepaid card information is directly output to a user. Accordingly, it is possible to completely exclude any risk caused by the distribution of prepaid cards having monetary values which has been hitherto carried out.

Furthermore, the prepaid card information can be directly issued to users who wish to use, and thus it is unnecessary to output too tough cards and also carry out special processing to make the numbers secret, so that the prepaid card information can be issued extremely simply at a low cost.

In addition, the selection of the type and face value of the prepaid card is completed by reading out the bar codes on the selection sheet with the bar code reader, so that the construction and practical use of the system can be made simple and easy.

The prepaid card information temporarily issued as described above can be used in the completely same manner as the conventional international call prepaid card.

That is, a call rate settlement system according to claim 3 is characterized by comprising: the prepaid card information issuing system having the character string storage means according to claim 1 or 2, the character string storage means storing character strings each containing at least an access number for connecting to an exchange of a specific communication business enterprise; rate system storage means for storing the rate systems of a communication business enterprise; a line connecting device for connecting a telephone terminal at a calling side and a telephone terminal at a call reception side; means for searching the prepaid card information storage means as the character string as a key when the character string concerned and the telephone number of the call reception side are input from the telephone terminal at the calling side, and checking the outstanding amount associated with the character string concerned; means for connecting the telephone terminal of the calling side and the telephone terminal of the call reception side when the outstanding amount is equal to a predetermined amount or more, and disconnecting the communication path between the calling-side terminal and the call-reception-side terminal at the time point when a call rate calculated by applying the call time between the telephone terminal of the calling side and the telephone terminal of the call reception side to the rate system exceeds the outstanding amount; and means for reducing the call rate from the outstanding amount.

Furthermore, the prepaid card information may be used for the settlement of a communication rate associated with the Internet.

That is, a communication rate settlement system according to claim 4 is characterized by comprising: the prepaid card information issuing system according to claim 1 or 2; rate system storage means for storing the rate system of an Internet connection business enterprise; a communication connecting device for connecting a user's communication terminal to the Internet; searching the prepaid card information storage means by using the character string as a key when the character string concerned is input through a communication line from the user's communication terminal, and checking the outstanding amount associated with the character string concerned; means for connecting the user's communication terminal to the Internet when the outstanding amount is equal to a predetermined value or more, and disconnecting the communication terminal from the Internet at the time point when a communication rate calculated by applying the communication time of the communication terminal to the rate system exceeds the outstanding amount; and means for reducing the communication rate from the outstanding amount.

A communication rate settlement system according to claim 5 is characterized by comprising: character string storage means for storing a plurality of character strings each consisting of a predetermined number of digits; means for selectively inputting the type and face value of a prepaid card; payment money input means for inputting the amount of paid cash money; means for generating prepaid card information by associating some character string in the character string storage means with the selected face value of the prepaid card when the selected face value is coincident with the paid amount of money; prepaid card information storage means for storing the prepaid card information; means for outputting the prepaid card information; rate system storage means for storing the rate system of an Internet connection business enterprise; a communication connecting device for connecting a user's communication terminal to the Internet; means for searching the prepaid card information storage means with the character string as a key when the character string concerned is input through a communication line from the user's communication terminal, and checking the outstanding amount associated with the character string concerned, means for connecting the user' s communication terminal to the Internet when the outstanding amount is equal to a predetermined value or more, and disconnecting the communication terminal from the Internet at the time point when a communication rate calculated by applying the communication time of the communication terminal to the rate system exceeds the outstanding amount; and means for reducing the communication rate from the outstanding amount.

A communication rate settlement system according to claim 6 is characterized by comprising: character string storage means for storing a plurality of character strings each consisting of a predetermined number of digits; means for selectively inputting the type and face value of a prepaid card; credit card information input means for inputting information concerning a credit card; means for transmitting the credit card information and the face value of the prepaid card to an external computer to request a settlement based on the credit card, and checking whether the settlement based on the credit card bas been completed; means for generating prepaid card information by associating some character string in the character string storage means with the face value when the settlement based on the credit card is completed; prepaid card information storage means for storing the prepaid card information; means for outputting the prepaid card information; rate system storage means for storing the rate system of Internet connection business enterprise; a communication connecting device for connecting a user's communication terminal to the Internet; means for searching the prepaid'card information storage means with the character string as a key when the character string concerned is input through a communication line from the user's communication terminal, and checking the outstanding amount associated with the character string concerned; means for connecting the user' s communication terminal to the Internet when the outstanding amount is equal to a predetermined value or more, and disconnecting the communication terminal from the Internet at the time point when a communication rate calculated by applying the communication time of the communication terminal to the rate system exceeds the outstanding amount; and means for reducing the communication rate from the outstanding amount.

The communication rate settlement system according to claim 4 is implemented on the assumption of the prepaid card information issuing system for specifying the type and face value of the prepaid card by inputting barcodes on the selection sheet. However, the communication rate settlement systems according to claims 5 and 6 have the feature that they are specified by other input means (for example, a touch panel of a multimedia terminal, a keyboard, a mouse or the like of a personal computer).

In the case of claim 6, a user can receive issuance of prepaid card information through a cellular phone having an Internet connection function.

In this case, the type and face value of a prepaid card which are transmitted from a server through the Internet and displayed on the display of a cellular phone are selectively input through the operation of the ten keys of the cellular phone by the user.

In response to this, a Web page file for requesting input of credit card information from the server is transmitted and displayed on the display.

When the credit card information is input from the ten keys of the cellular phone by the user, it is judged at the server side whether it is possible to carry out the settlement based on the credit card or not.

When the settlement has been completed, the prepaid card information is generated, and transmitted through the Internet to the cellular phone.

The prepaid card information is output to/displayed on the display of the cellular phone.

Furthermore, the prepaid card information can be used to carry out expense settlement other than the call rate and the communication rate.

That is, an expense settlement system according to claim 7 is characterized by comprising: the prepaid card information issuing system according to claim 1 or 2, means for searching the prepaid card information storage means with the character string as a key when an expense settlement request having the character string concerned is transmitted from a communication terminal of an on-line service enterprise, and checking the outstanding amount associated with the character string concerned; means for comparing the outstanding amount with the expense and determining whether it is possible to make settlement or not; and means for reducing the money amount corresponding to the expense from the outstanding amount when the settlement can be made.

### BRIEF DESCRIPTION OF THE DRAWINGS

Fig. 1 is a conceptual diagram showing a prepaid card information issuing system according to the present invention.
Fig. 2 is a block diagram showing the functional construction of the prepaid card information issuing system.
Fig. 3 is a flowchart showing the processing procedure when a prepaid card is issued.
Fig. 4 is a layout diagram showing an example of a selection sheet.
Fig. 5 is a layout diagram showing an example of the prepaid card.
Fig. 6 is a front view showing the outlook of a multimedia terminal.
Fig. 7 is a layout diagram showing a screen display on the display of the multimedia terminal.
Fig. 8 is a flowchart showing the processing procedure when a prepaid card for a specific provider is achieved by using the multimedia terminal.
Fig. 9 is a layout diagram showing a screen display on the display of the multimedia terminal.
Fig. 10 is a layout diagram showing a screen display on the display of the multimedia terminal.
Fig. 11 is a layout diagram showing a screen display on the display of the multimedia terminal.
Fig. 12 is a layout diagram showing an example of a reception ticket.
Fig. 13 is a layout showing an example of a prepaid card for an Internet connection service.
Fig. 14 is a conceptual diagram showing a call rate settlement system using prepaid card information.
Fig. 15 is a flowchart showing the processing procedure of the call rate settlement system.
Fig. 16 is a conceptual diagram showing a communication rate settlement system in the Internet connection service using prepaid card information.
Fig. 17 is a flowchart showing the processing procedure in the communication rate settlement system.
Fig. 18 is a conceptual diagram showing an expense settlement system for on-line shopping and on-line services which use prepaid card information.
Fig. 19 is a flowchart showing the processing procedure in the expense settlement system.

### BEST MODE FOR CARRYING OUT THE INVENTION

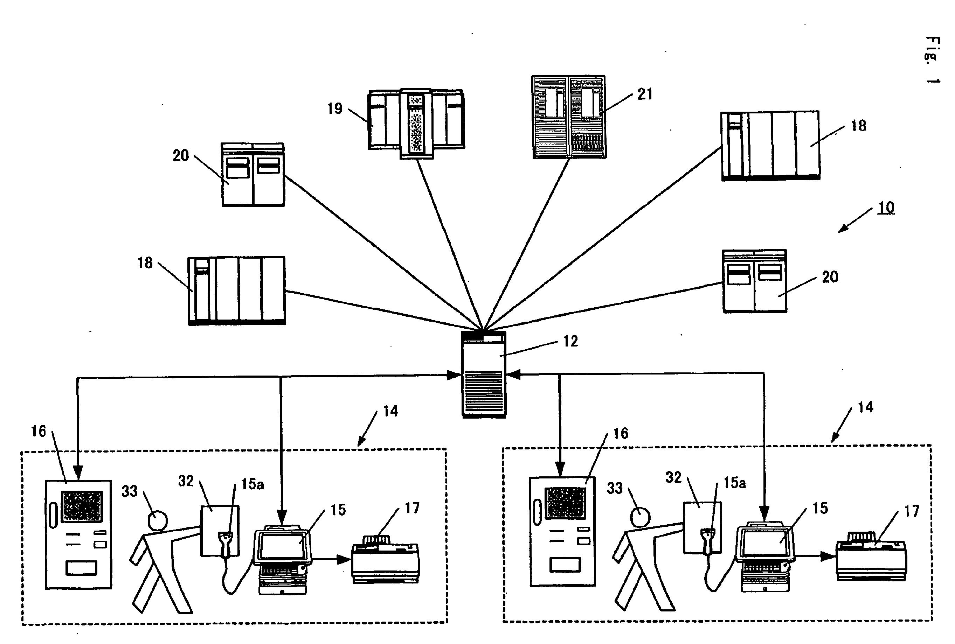

Fig. 1 is a conceptual diagram showing an overall image of a prepaid card information issuing system 10 according to the present invention, and it is equipped with a center server 12 disposed at the center, and POS cash register terminal 15 and multimedia terminals 16 disposed in the convenience stores (hereinafter referred to as "convenience store 14") in some areas around the nation.

The center server 12 comprises a main frame, a computer system such as a work station or the like, and it is equipped with CPU, RAM, ROM, a hard disk, a communication interface, etc. as not shown.

The POS cash register terminal 15 comprises a computer like a personal computer (hereinafter referred to as "personal computer") , and is equipped with CPU, RAM, ROM, a communication interface, a display, a keyboard, a barcode reader 15a, etc. A printer 17 and a credit card reader (not shown) mounted in the convenience store 14 are connected to the POS cash register terminal 15.

The multimedia terminal 16 comprises a computer system like a personal computer, and it is equipped with CPU, RAM, ROM, a hard disk, a communication interface, a display having a touch panel, an issuing machine, a cash dealing machine, a credit card reader, a network interface, etc.

The center server 12 is connected to the POS cash register terminals 15 and the multimedia terminals 16 in a network style through communication interfaces and exclusive lines.

Various other computers are also connected to the center server 12 through exclusive lines. That is, computer systems (exchanges) 18 of international communication business enterprises, computer systems 19 of credit card companies, servers 20 of Internet connection enterprises (hereinafter referred to as "providers"), Web servers 21 of on-line service business enterprises, etc. are connected to the center server 12.

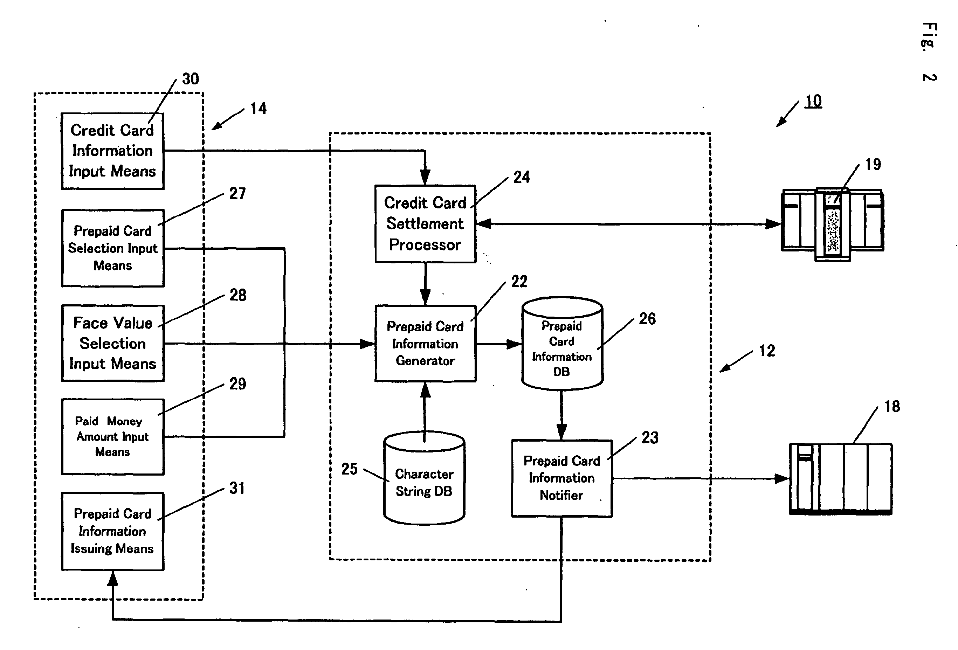

Fig. 2 is a block diagram showing the functional construction of the prepaid card information issuing system 10. First, the center server 12 is equipped with a prepaid card information generator 22, a prepaid card information notifier 23, a credit card settlement processor 24, a character string data base 25 and a prepaid card information data base 26.

CPU of the computer constituting the center server 12 execute necessary processing according to OS and application programs to thereby implement the prepaid card information generator 22, the prepaid card information notifier 23 and the credit card settlement processor 24.

Furthermore, the character string data base 25 and the prepaid card information data base 26 are stored in the hard disc of the same computer.

On the other hand, prepaid card selection input means 27, face value selection input means 28, paid money amount inputting means 29, credit card information input means 30 and prepaid card information issuing means 31 are equipped at the convenience store 14 side.

The prepaid card selection input means 27 and the face value selection input means 28 correspond to the barcode reader 15a of the POS cash register terminal 15, and the paid money amount input means 29 corresponds to the keyboard of the POS cash register terminal 15. Furthermore, the credit card information input means 30 corresponds to the credit card reader connected to the POS cash register terminal 15, and the prepaid information issuing means 31 corresponds to the printer 17 connected to the POS cash register terminal 15.

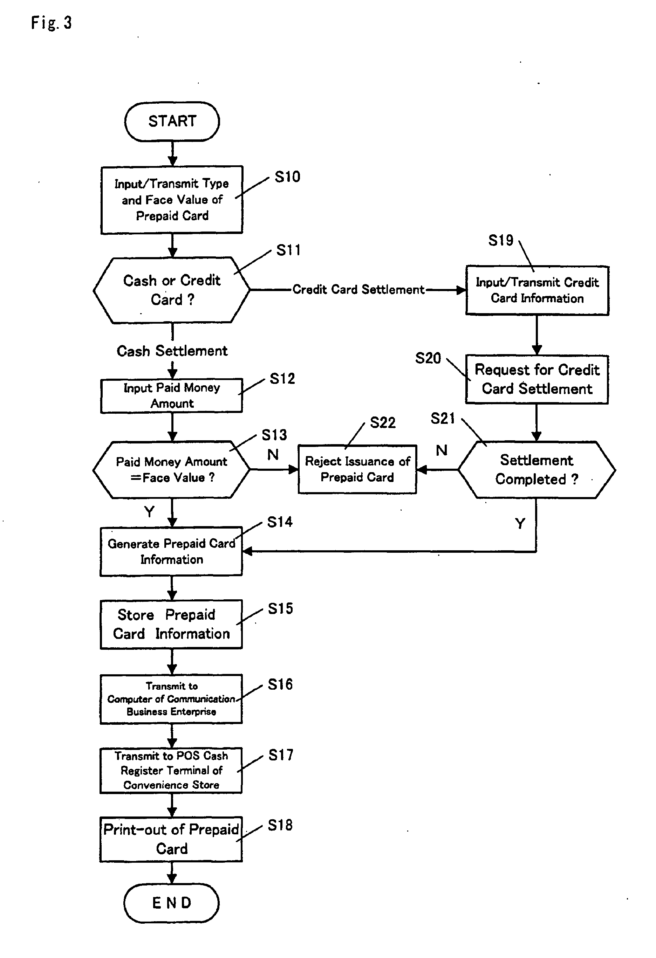

Next, the processing procedure when the prepaid card information is issued will be described with reference to the flowchart of Fig. 3.

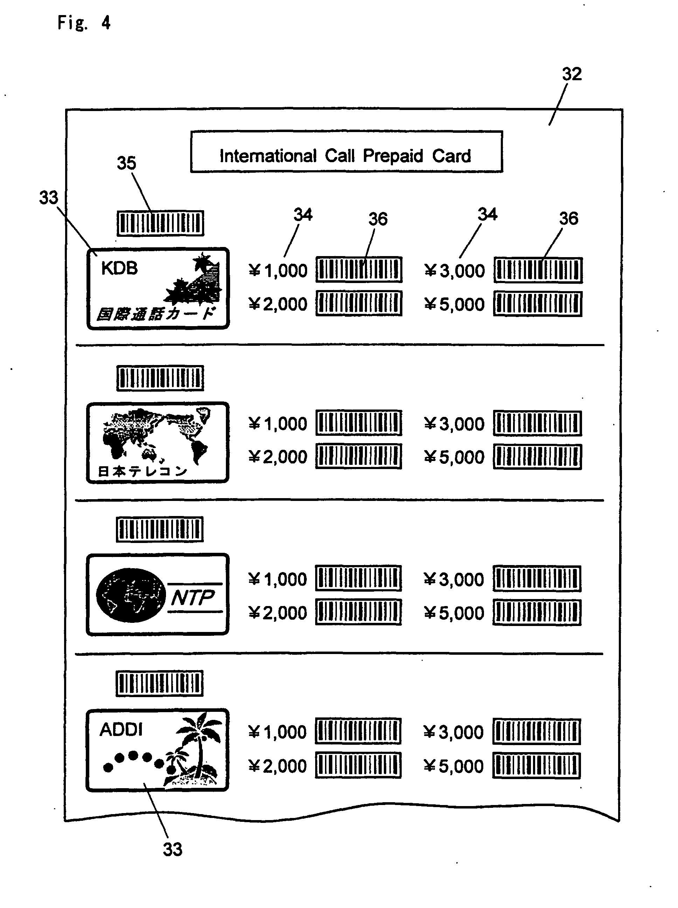

A selection sheet for selecting various kinds of prepaid cards in advance is prepared in a convenience store 14. Fig. 4 shows an example of the selection sheet. The images 33 of the various kinds of prepaid cards and characters 34 representing the face values are printed on the surface of the selection sheet 32, and also barcodes 35, 36 for specifying them are displayed.

In the figure, an international telephone prepaid card issued by each communication business enterprise is shown as an example. In addition to the above international telephone prepaid card, a prepaid card for a provider, a prepaid card for a Net game service business enterprise, a prepaid card for settling Internet shopping, etc. are prepared.

A user indicates the type and face value of a desired prepaid card on the selection sheet 32 to a shop-clerk of the convenience store 14. In response to this indication, the shop-clerk of the convenience store 14 reads out, through a barcode reader 15a of the POS cash register terminal 15, the barcodes 35, 36 corresponding to the prepaid card and face value selected by the user. The information for specifying the type and face value of the prepaid card which are input through the POS cash register 15 is transmitted to the center server 12 on a real-time basis (S10).

Subsequently, the shop-clerk of the convenience store 14 requests a cash payment or a payment based on a credit card to the user.

When the user pays the cash (S11), the shop-clerk of the convenience 14 inputs a reception money amount from the keyboard of the POS cash register terminal 15 (S12).

After the prepaid card information generator 22 of the center server 12 checks that the face value information of the prepaid card and the payment money information which are transmitted from the POS cash register terminal 15 are coincident with each other (S13), the prepaid card information generator 22 extracts a character string (for example, "31-732-7381-5419-#") associated with a communication business enterprise selected by the user from the character string data base 25, and associates the character string thus extracted with the face value to generate prepaid card information (S14).

The prepaid card information is stored in the prepaid card information data base26 (S15), and transmitted through the prepaid card information notifier 23 to the computer system 18 of the communication business enterprise (S16).

At the same time, the prepaid card information is transmitted through the prepaid card information notifier 23 to the POS cash register terminal 15 of the convenience store 14 (S17), and output through the printer 17 (S18).

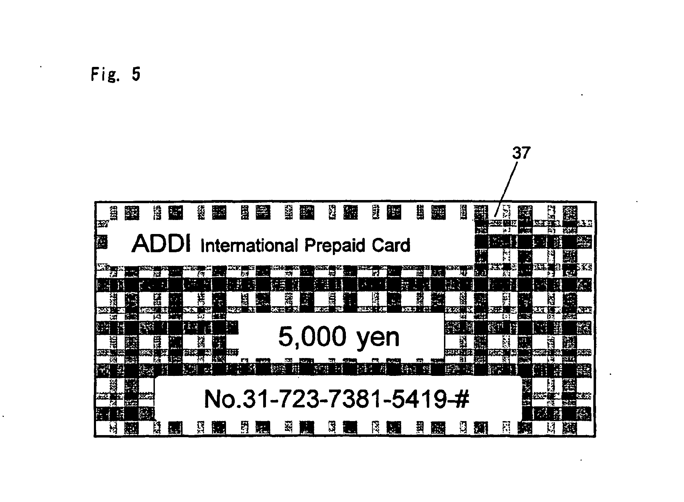

Fig. 5 shows a prepaid card 37, and at least the face value of the prepaid card concerned and the character string (card number) "31-732-7381-5419-#" associated with the prepaid card information are printed on the surface of a sheet.

The character string of the prepaid card contains an access number for connection to the computer system of the communication business enterprise.

In place of the output of the prepaid card 37 as described above by the printer 17, the character string may be printed on a sheet discharged from the POS cash register terminal to issue the prepaid card information.

When the user requests the payment on the credit card in place of the cash (S11), the shop-clerk of the convenience store 14 applies the credit card taken from the user to the card reader disposed in the neighborhood of the cash register to read out credit card information recorded in a magnetic recording portion and transmit it to the center server 12 through an exclusive line (S19).

The credit card settlement processor 24 of the center server 12 receiving the credit card information transmits the credit card information concerned to the computer system 19 of the credit card company 19, and requests the settlement corresponding to the face value on the basis of the credit card (S20).

When a settlement completing notification is transmitted from the computer system 19 of the credit company (S21), the center server 12 generates the prepaid card information according to the same procedure as described above, and issues the prepaid card information to the user (S14 to S18).

When the paid money amount is smaller than the face value in S13 or when no credit card settlement completing notification is output due to expiration of an effective term or the like in S21, it is needless to say that the issuance of the prepaid card is rejected (S22).

AS described above, in place of the manner of separately displaying the prepaid card identifying barcode 35 and the face value specifying barcode 36 on the selection sheet 32 as described above, there may be adopted a manner of printing a barcode comprising a fusion of both the barcodes so that the type and face value of the prepaid card can be specified by merely reading out the barcode concerned through the barcode scanner 15a.

In place of use of the selection sheet 32, the type and face value of the prepaid card may be specified by using the multimedia terminal 16.

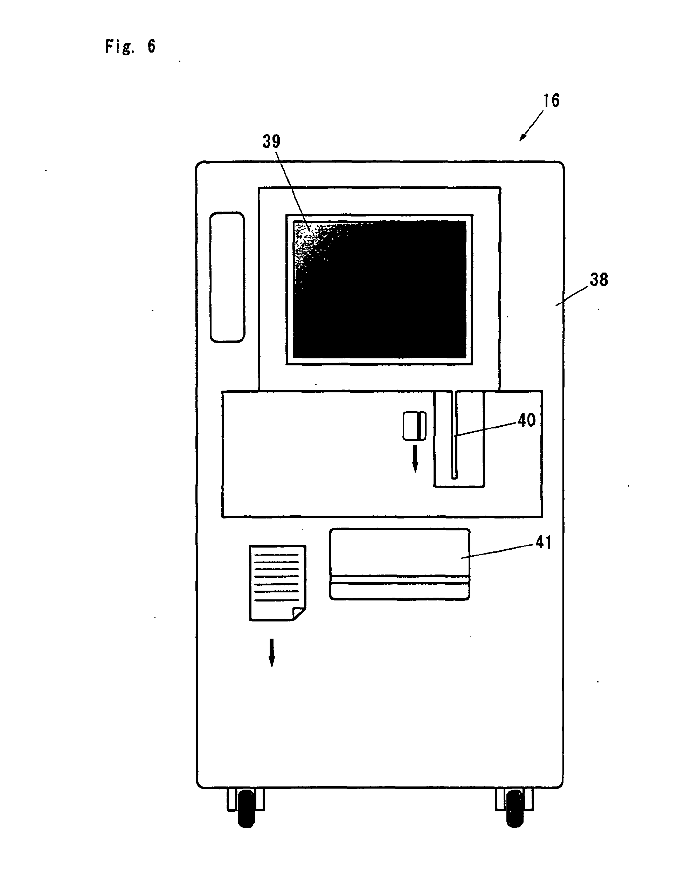

Fig. 6 shows the outlook of the multimedia terminal 16. A display 39 having a touch panel is disposed at the upper portion of the front face of the housing 38, and a credit card sliding slit 40 is equipped below the display 39. Furthermore, a sheet discharge port 41 is equipped below the credit card sliding slit 40.

First, the user presses the surface of the display 39 by his/her finger to select an issuance service of prepaid card information from a service menu displayed.

Here, for example when a prepaid card for Internet connection service is purchased, "Internet Using Prepaid Card" is selected (not shown).

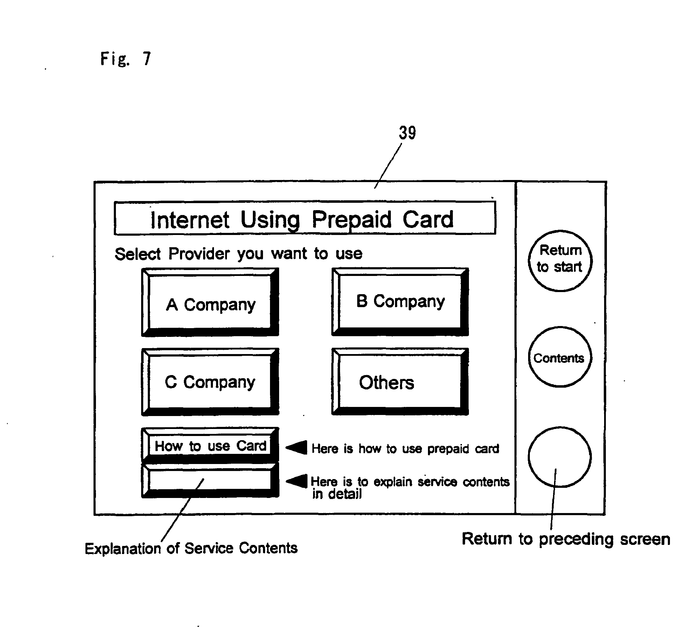

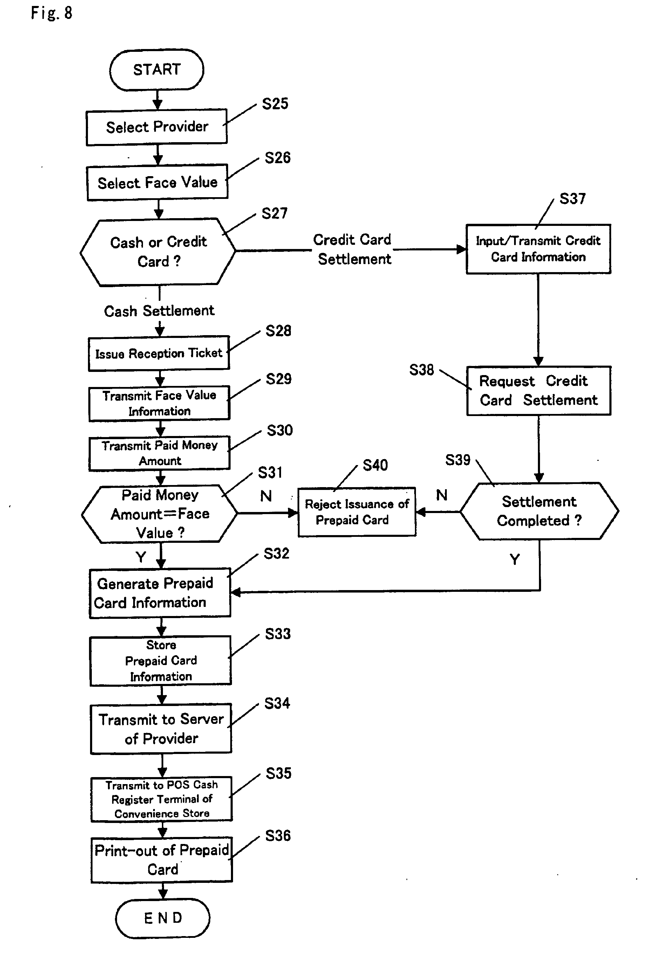

As a result, as shown in Fig. 7, a screen for selecting providers A company to C company, etc. is displayed on the display 39. The processing procedure when a prepaid card for a specific provider is issued by using the multimedia terminal 16 will be described with reference to the flowchart of Fig. 8.

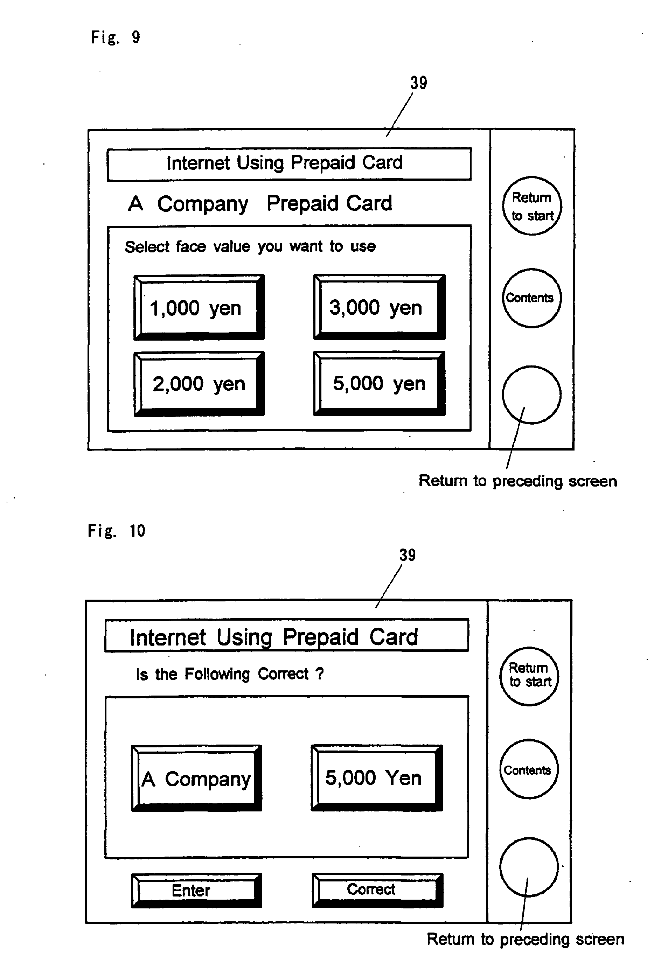

When the user selects one company (for example, A company) from the providers displayed on the display 39 (S25), a face value selecting screen is displayed as shown in Fig. 9.

When a required face value (for example, 5,000yen) is selected from the face value selecting screen (S26), a confirmation screen is displayed as shown in Fig. 10. If there is no mistake in the name of the provider and the face value, the user touches an "enter" button. If the user alters them, the user touches a "correct" button, and then re-tries from the beginning.

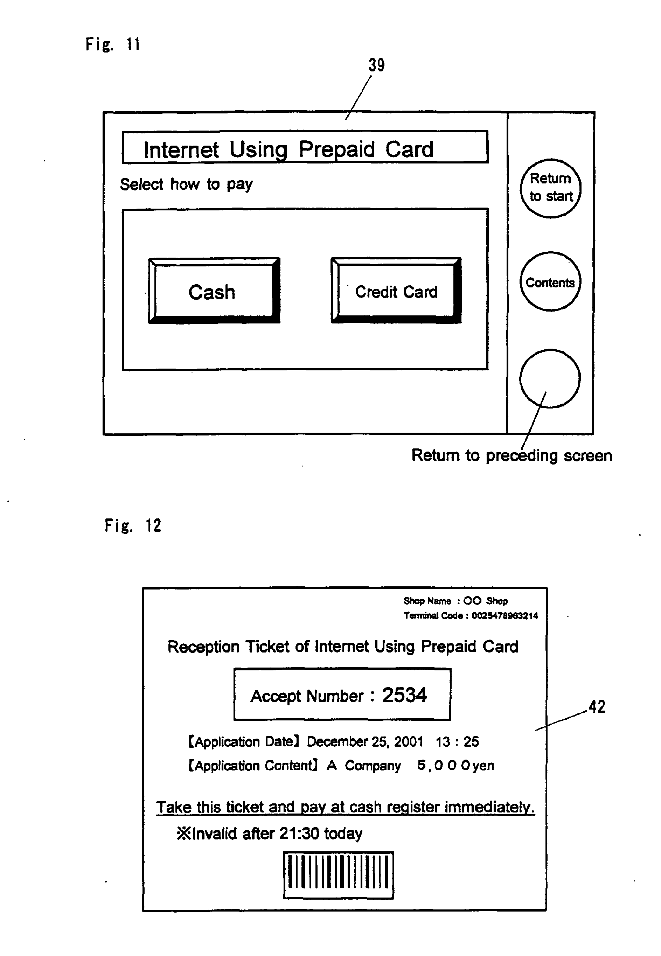

Subsequently, since a payment method selecting screen is displayed as shown in Fig. 11, the cash payment or the payment on credit is selected (S27).

Here, when the "cash" button is touched to select the cash settlement, the issuing machine in the multimedia terminal 16 is actuated to print a reception ticket 42 shown in Fig. 12 and issue it from the sheet discharge port 41 (S28).

At the same time, the face value information of "5,000yen" selected/input is transmitted to the center server 12 through an exclusive line (S29).

On the reception ticket 42 are printed an acceptance number, descriptions such as an application date, an application content, etc. and the barcode corresponding to the application content.

The user puts this reception ticket 42 to the cash register of the convenience store 14, and pays 5,000yen in cash. The shop-clerk of the convenience store 14 checks whether the amount of money is correct or not, and then inputs the barcode of the reception ticket 42 by the scanner 15a of the POS cash register terminal 15.

The paid money amount information of "5,000yen" input from the scanner 15a is transmitted through the exclusive line to the center server 12 (S30).

In the center server 12, the prepaid card information generator 22 compares the previously-transmitted face value information with the paid money amount information. If both the information are coincident with each other (S31), the character string (for example, "AETO456126-QRST23") at the head is extracted from a character string list of the A company which is stored in the character string data base 25 in advance, and it is associated with the face value information of "5,000yen" (the outstanding amount information) to generate prepaid card information (S32).

The prepaid card information is stored in the prepaid card information database 26 (S33), and transmitted through the prepaid card information notifier 23 to the server 20 of the provider concerned (S34).

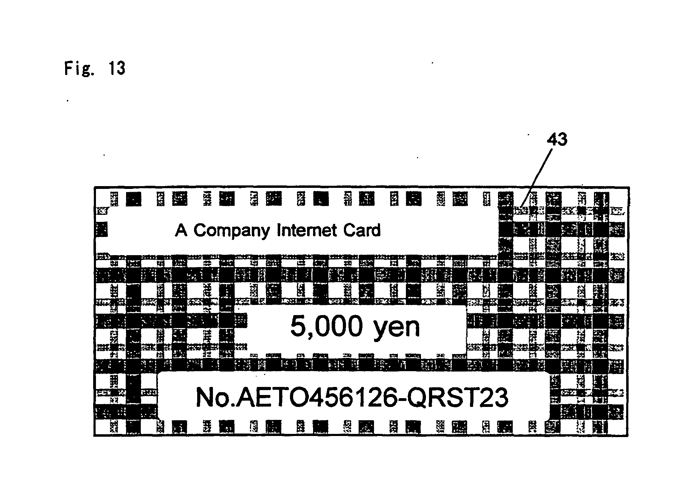

At the same time, a prepaid card information output instruction is output to the POS cash register terminal 15 through the exclusive line (S35). As a result, a prepaid card 43 for Internet Connection Service as shown in Fig. 13 is output from the printer 17 disposed in the neighborhood of the cash register of the convenience store 14 (S36).

On the prepaid card 43 is described not only the character of "5000yen" indicating the amount of money, but also the character string of the prepaid card information generated by the center device 30.

Afterwards, the user can be provided with the Internet connection service corresponding to "5,000yen" using the prepaid card information from the A company, and the details thereof will be described later.

When the user selects the credit-card settlement on the payment method selecting menu shown in Fig. 11 (S27), a guidance screen for promoting input of credit card information which is omitted from illustration is displayed on the display 39.

When the user inserts the magnetic recording portion of the his/her own credit card into the slit 40 and slides it in the direction of an arrow according to this display, the card reader disposed inside the slit 40 reads out the credit card information recorded in the magnetic recording portion. This information is transmitted through the exclusive line to the center server 12 (S37).

The credit card settlement processor 24 of the center server 12 transmits the credit card information to the computer system 19 of the credit card company, and requests the settlement of "5,000yen" using the credit card concerned (S38).

When a settlement completing notification is transmitted from the computer system 19 of the credit company (S39), the prepaid card information generator 22 of the center server 12 generates the prepaid card information according to the same procedure as described above (S32).

In this case, since the cash payment at the cash register of the convenience store 14 is not required, the prepaid card 43 shown in Fig. 13 is printed by the issuing machine of the multimedia terminal 16, and directly supplied from the discharge port 41.

When the paid money amount is smaller than the face value in S31 or when no credit card settlement completing notification is output due to expiration of an effective term or the like in S39, it is needless to say that the issuance of the prepaid card is rejected (S40).

The prepaid card 43 may be directly supplied from the discharge port 41 of the multimedia terminal 16 by installing a cash dealing machine of an automatic vending machine or cash dispenser of a bank into the multimedia terminal 16.

For example, when the "cash" is selected on the payment method selecting screen of Fig. 11, a screen for promoting a user to put cash into a cash slot is displayed (not shown) in place of output of the reception ticket 42. When the user puts cash according to this screen, the sensor detects the cash and computes the amount of money thus put.

When the amount of money thus put is coincident with the face value selected on the face value selecting screen (Fig. 9), paid money amount check data are generated, and transmitted through the exclusive line to the center server 12.

In the center server 12, the prepaid card information is generated according to the same procedure as described above, and transmitted to the multimedia terminal 16, so that the issuing machine 45 is driven and the prepaid card 43 is output.

If the amount of money is smaller, a message indicating "dealing is impossible because of insufficient amount of money" and a message promoting the user to put the required amount of money again are displayed, and the amount of money thus put is returned.

Conversely, when the amount of money is larger, the change is given from a cash drop and then the prepaid card 43 is issued according to the same procedure as described above.

As described above, by equipping the multimedia terminal 16 itself with a mechanism for processing payment of cash, computing of amount of money and pay-back, it is possible to omit a labor of bringing the reception ticket 42 to the cash register and paying the amount of money there.

According to the prepaid card information issuing system 10, no proprietary nature is added to the character string unless the user pays the amount of money, and thus the amount-of-money information is not added to the character string in advance unlike the conventional prepaid card for international telephones. Accordingly, there is no risk that prepaid cards may be stolen until they are delivered to users.

Of course, there may be a risk that prepaid card information which is once issued is stolen by a third party. However, the amount of money thus stolen is limited to the range of the face value set by the user itself. Therefore, the user can be prevented from suffering an unexpected loss like a case where a credit card or cash card is stolen.

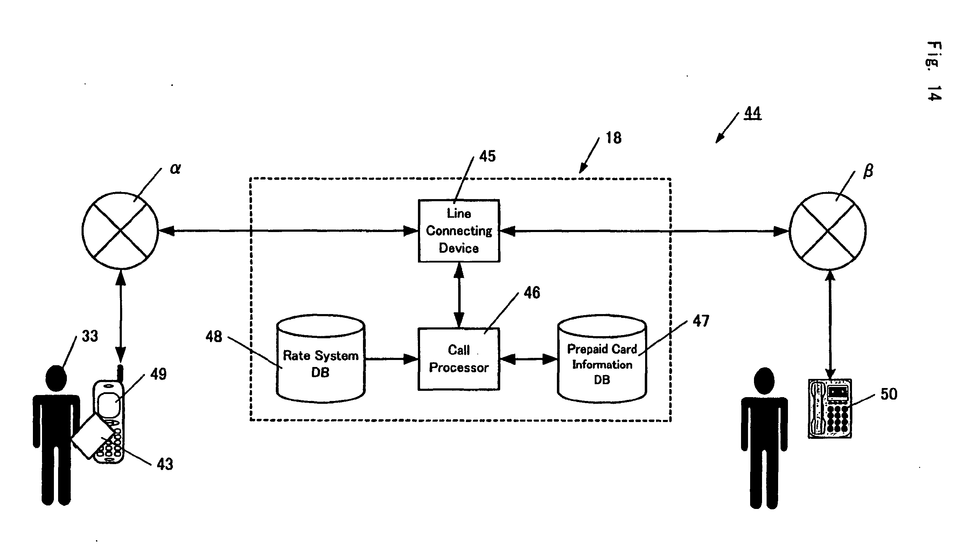

Next, a call rate settlement system 44 for an international call using a prepaid card will be described with reference to Fig. 14.

First, the computer system (exchange) 18 of an international communication business enterprise is equipped with a line connecting device 45 for implementing connection or disconnection of a telephone line, a call processor 46 for controlling the line connecting device 45, a local prepaid card information data base 47 for storing prepaid card information transmitted from the center server 12, and a rate system data base 48 for storing rate system information of communication rate.

CPU of the computer executes necessary processing according to OS and application programs to thereby implement the call processor 46.

Rate unit cost information is stored every time zone and every country in the rate system data base 48.

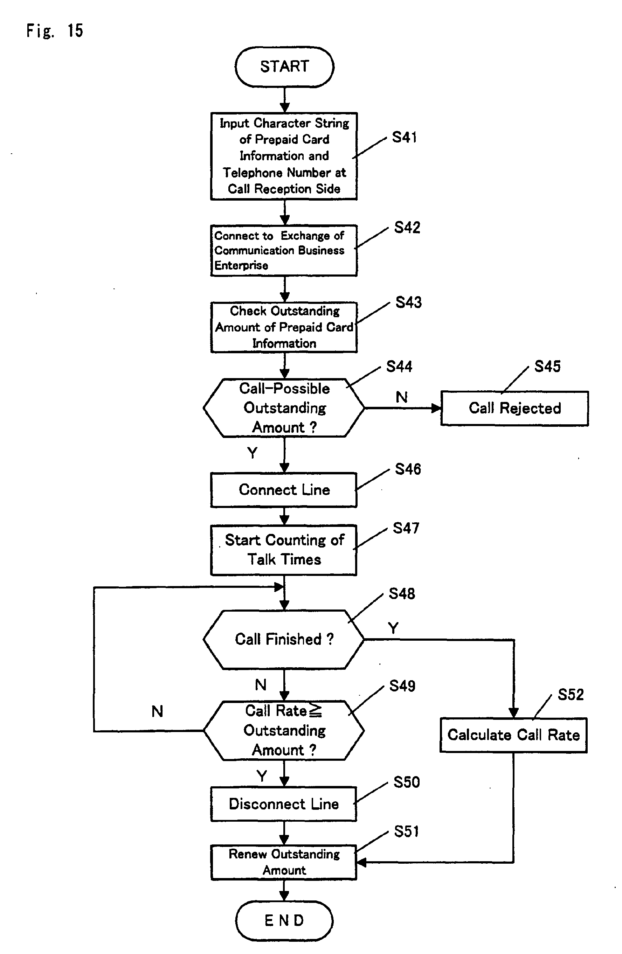

The processing procedure of the call rate settlement system 44 will be described with reference to the flowchart of Fig. 15.

First, a user (calling person) 33 who achieves an international call prepaid card 43 of some international communication business enterprise in advance inputs a character string described on the prepaid card 43 and the telephone number of a call reception side by using a his/her own cellular phone 49 (S41).

Since the character string of the prepaid card 43 contains an access number to the international communication business enterprise concerned, the cellular phone 49 is automatically line-connected to the computer system 18 of the international communication business enterprise through a public line network α (S42).

The call processor 46 detecting this access searches the prepaid card information data base 47 with the input character string as a key, and checks the outstanding amount associated with the character string concerned (S43) to judge whether the outstanding amount is sufficient to permit the call (S44).

When the outstanding amount is less than a predetermined amount of money (for example, 15yen), a judgment "call is impossible" is made, and a voice message indicating such a point that "connection is impossible because of insufficient outstanding amount" is returned to the user 33 through the message generator (not shown), and the line to the cellular phone 49 is disconnected (S45).

On the other hand, when the outstanding amount of the prepaid card information is equal to a fixed amount of money or more, the call processor 46 makes a judgment "call is possible", and drives the line connecting device 45 to connect the cellular phone 49 at the calling side and a telephone 50 at the call reception side through an international line network β (S46).

Simultaneously with the line-connection, the call processor 46 starts the time-counting of talk times (S47) and monitors the talk times so that the call rate does not exceed the outstanding amount of the prepaid card.

Specifically, the present moment and the country information determined from the telephone number at the call reception side are applied to the rate system in the rate system data base 48 to determine the call rate unit cost, and the outstanding amount is divided by the call rate unit cost thus determined to calculate a call-possible time. At the time point when the talk times exceed the call-possible time (S49), the line is forcedly disconnected (S50). After the line disconnection, the call processor 46 reduces and alters the outstanding amount of he prepaid card information concerned to zero (S51).

Alternatively, the call rate per unit time is successively subtracted from the outstanding amount every unit time (for example, every 6 seconds), and the line is forcedly disconnected (S50) at the time point when the outstanding amount is equal to zero (S49).

When the call is spontaneously finished before the outstanding amount is equal to zero (S48), the call processor 46 calculates the call rate accumulated till that time point (S52), and executes the renewal processing of subtracting the call rate from the outstanding amount in the prepaid card information data base 47 (S51).

With respect to the amount of money paid when the user achieves the international call prepaid card 43, the amount of money concerned is remitted from the managing operator of the prepaid card information issuing system 10 to the international communication business enterprise in advance, and this remittance is applied to the payment of the call rate concerned, so that the international communication business enterprise suffers no dead loan risk.

The foregoing description relates to the case where an international call is made from the cellular phone 49 of the user 33, however, the call rate settlement system 44 is not limited to this mode.

That is, even when the user 33 connects to the computer system 18 by inputting prepaid card information from a fixed telephone or public telephone, the outstanding amount of the prepaid card information can be used for the settlement of the international call rate like the case where the international call is made form the cellar phone 49.

Furthermore, when the communication enterprise is also adapted to the domestic call, the outstanding amount of the prepaid card information can be applied to the call rate settlement of the domestic call.

In place of issuance of prepaid cards 43 which are different every communication business enterprise in the prepaid card information issuing system 10, prepaid cards 43 common to the respective communication business enterprises may be issued.

That is, an access number for connecting to the center server 12 is installed into the character string of the prepaid card information, so that the user 33 is first connected to the center server 12 by inputting the character string of the prepaid card from the cellular phone 49.

Then, the center server 12 selects a communication business enterprise which is most favorable to the user in the call rate at that time, and implements the connection between the calling side and the call reception side through the computer system 18 of the communication business enterprise concerned.

In this case, the line-connecting device 45, the prepaid card information data base 47, and the rate system data base 48 are disposed at the center server 12 side.

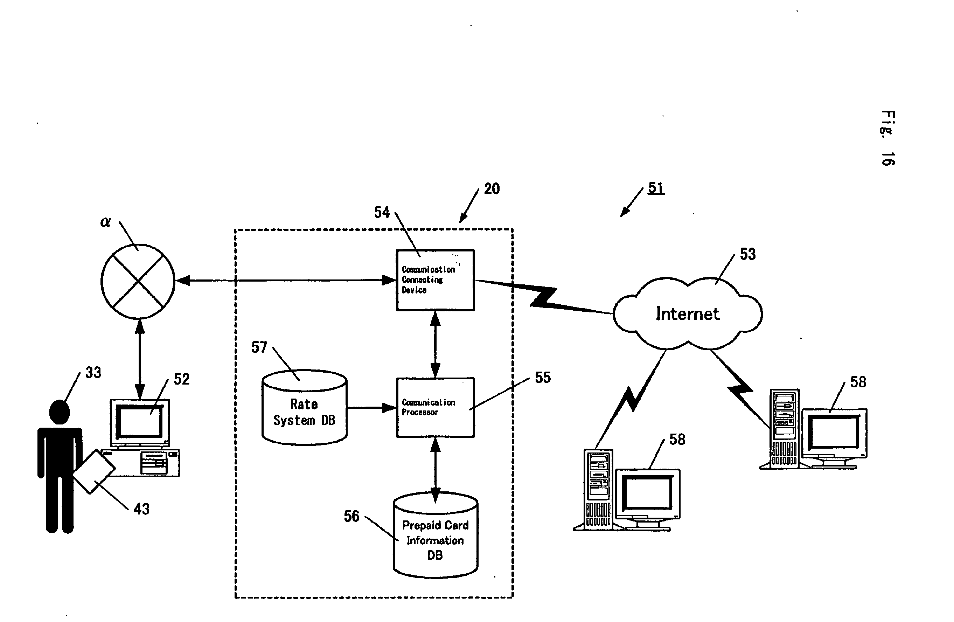

Next, a communication rate settlement system 51 in the Internet connection service using prepaid card information will be described with reference to Fig. 16.

First, the server 20 of a provider is equipped with a communication connecting device 54 for connecting a personal computer 52 of a user 33 to the Internet 53, a communication processor 55 for carrying out connection/disconnection control of the communication connecting device 54, a local prepaid card information data base 56 for storing prepaid card information transmitted from the center server 12, and a rate system data base 57 for storing rate system information of a communication rate.

CPU of the server 20 executes necessary processing according to OS and application programs to thereby implement the communication processor 55.

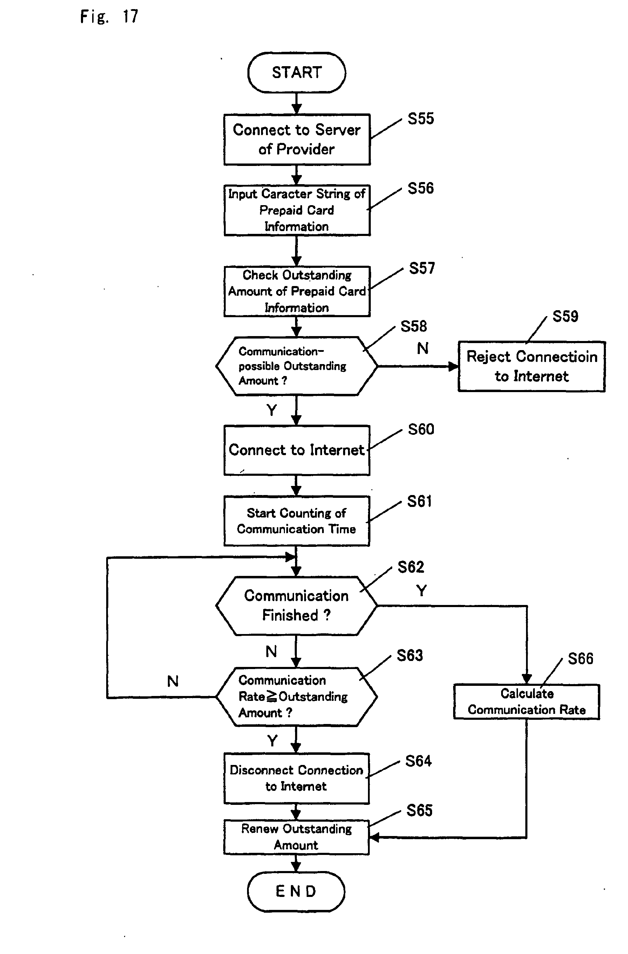

The processing procedure of the communication rate settlement system 51 will be described according to the flowchart of Fig. 17.

First, the user 33 who achieves an Internet connection service prepaid card 43 of a specific provider in advance makes a dial-up connection to the provider's server 20 from his/her own personal computer 52 (S55).

At this time, a dialogue for requesting an input of a character string (personal identification number) of the prepaid card 43 is displayed on the screen of the personal computer.

When the user 33 inputs the character string of the prepaid card 43 (S56) in response to the above request, the communication processor 55 searches the prepaid card information data base 56 by using the character string thus transmitted as a key, and checks the outstanding amount associated with the character string concerned (S57) to judge whether the outstanding amount concerned is enough to permit the Internet connection (S58).

When the outstanding amount is less than a predetermined amount of money, a judgment "insufficient communication rate" is made, and the connection to the Internet 53 is rejected (S59)

On the other hand, when the outstanding amount of the prepaid card information is equal to a fixed amount of money or more, the communication processor 55 makes a judgment "connection is possible", and drives the communication connecting device 54 to connect the personal computer 52 of the user 33 through the Internet 53 to a prescribed Web server 58 (S60).

Simultaneously with the start of the connection, the communication processor 55 starts the time-counting of the communication time (S61), and monitors the communication time so that the communication rate does not exceed the outstanding amount of the prepaid card 43.

Specifically, the communication rate per unit time is successively subtracted from the outstanding amount every unit time (for example, every one minute), and the Internet connection is forcedly disconnected (S64) at the time point when the outstanding point is equal to zero (S63). After the Internet connection is disconnected, the communication processor 55 subtracts and renews the outstanding amount of the prepaid card information concerned to zero (S65).

When the communication is spontaneously finished before the outstanding amount is equal to zero (S62), the communication processor 55 calculates the communication rate accumulated till that time point (S66), and then executes the renewal processing of subtracting the communication rate thus calculated from the outstanding amount in the prepaid card information data base 56 (S65).

When it is judged that the outstanding amount is less than the purchase expense in S58, it is needless to say that the Internet connection using the prepaid card 43 concerned is rejected (S59).

With respect to the paid amount of money when the user achieves the Internet connection service prepaid card 43, it is remitted from the managing operator of the prepaid card information issuing system 10 to the provider in advance, and this is applied to the payment of the communication rate concerned, so that the provider suffer no dead loan risk.

As described above, in place of issuance of prepaid cards 43 which are different every provider in the prepaid card information issuing system 10, prepaid cards 43 common to the respective providers may be issued.

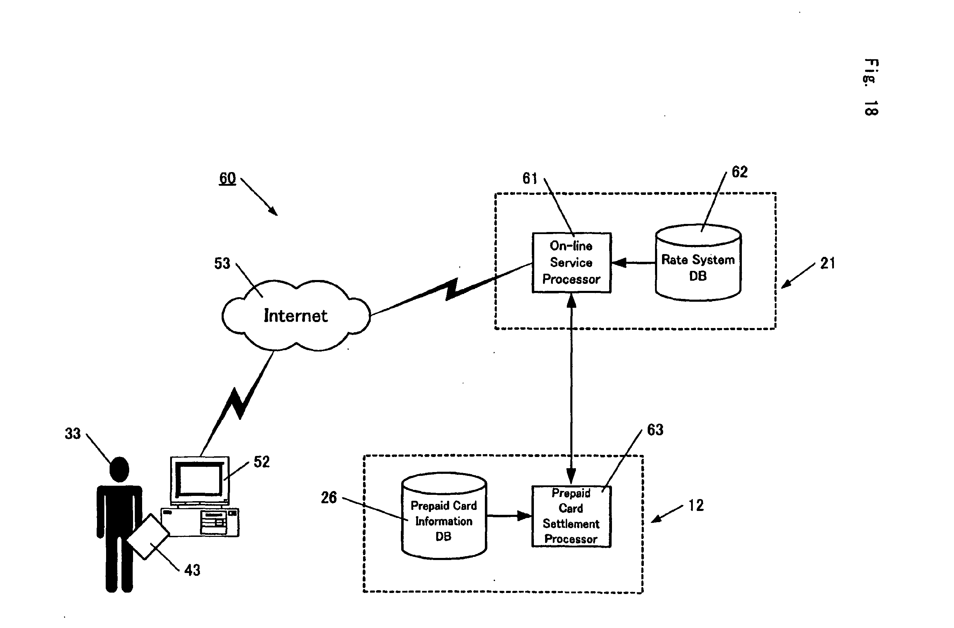

Next, an expense settlement system 60 for on-line shopping or on-line services which uses prepaid card information will be described with reference to Fig. 18.

First, the Web server 21 of the on-line service business enterprise is equipped with an on-line service processor 61, and a rate system data base 62 for storing a rate system associated with various kinds dealing goods and services.

CPU of the computer executes necessary processing according to OS and application programs to thereby implement the on-line service processor 61.

Furthermore, the center server 12 is equipped with a prepaid card settlement processor 63, and a prepaid card information data base 26. CPU of the computer constituting the center server 12 executes necessary processing according to OS and application programs to thereby implement the prepaid card settlement processor 63.

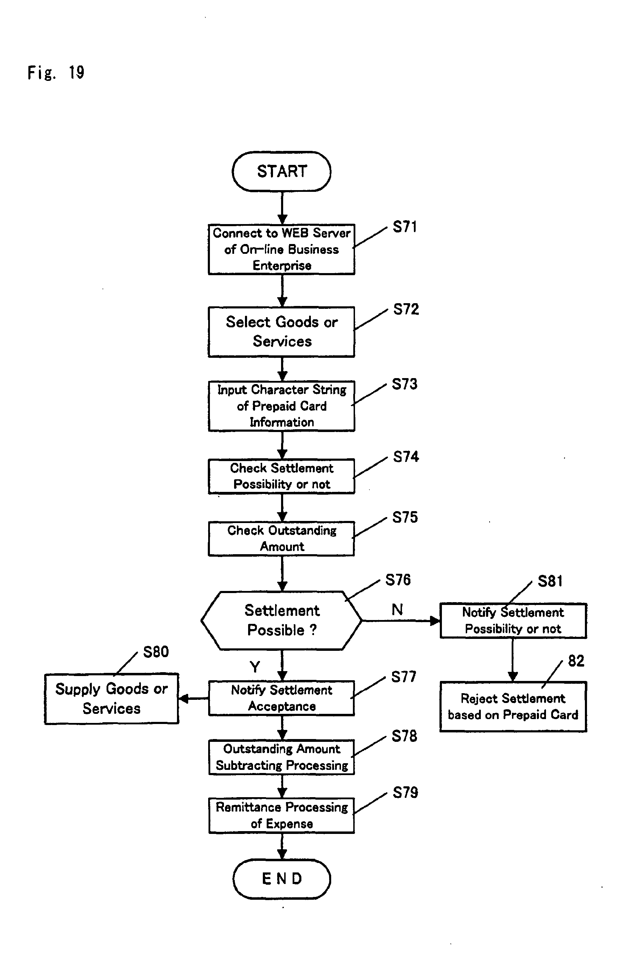

The processing procedure of the expense settlement system 60 will be described according to the flowchart of Fig. 19.

First, the user 33 who achieves a prepaid card 43 exclusively used for Internet settlement in advance by using the above prepaid card information issuing system 10, connects to the Internet 53 by using his/her own personal computer 52, and accesses the Web server 21 of the on-line service business enterprise (S71).

After selecting desired goods or services on the Web page of the on-line service business enterprise (S72), the user indicates the prepaid card as the expense settlement method, and inputs the character string of the prepaid card 43 from the keyboard (S73).

The on-line service processor 61 of the Web server 21 receiving the character string concerned immediately transmits the character string concerned through an exclusive line to the center server 12, and inquires about whether the expense settlement is possible or not (S74).

In the center server 12, the prepaid card settlement processor 63 searches prepaid card information data base 26 by using the character string transmitted from the Web server 21 as a key, and checks the outstanding amount at the present moment (S75).

When it is judged that the outstanding amount exceeds the purchase expense (S76), a signal indicating acceptance of settlement is transmitted to the Web server 21 (S77). Furthermore, the renewal processing of subtracting the amount of money corresponding to the purchase expense from the outstanding amount is executed (S78).

Afterwards, the remittance processing of remitting the expense from the managing operator of the center service 12 to the bank account of the on-line service business enterprise is executed through the on-line banking system of the bank (S79).

In the Web server 21 which receives the settlement acceptance signal from the center server 12, processing (distribution processing of goods, download processing of programs etc.) necessary to provide goods or services which are requested by the user 33 is executed by the on-line service processor 61 (S80).

When it is judged in S76 that the outstanding amount is lower than the purchase expense, a signal indicating that the settlement is impossible is transmitted from the prepaid card settlement processor 63 of the center server 12 to the Web server 21 (S80), and the settlement using the prepaid card 43 concerned is rejected (S81).

When the content of the on-line service business adopts a metered rate charging system in which the rate is added in proportion to time lapse like an Internet game service, the Web server 21 of the business enterprise accesses the center server 12 every time a fixed unit time elapses, and executes the settlement processing using the prepaid card information little by little, thereby avoiding the risk of unearned expense.

### INDUSTRIAL APPLICABILITY

According to the prepaid card information issuing system according to the present invention, it is not carried out to display on a prepaid card a character string associated with face value information in advance, but it is carried out to associate a character string with face value information to generate prepaid card information at the time point when settlement completion based on payment of cash or a credit card is confirmed, and directly output the prepaid card information to the user. Therefore, the risk caused by distribution of prepaid cards having monetary values which has been hitherto carried out can be perfectly excluded.

Furthermore, prepaid card information is directly issued to a user who wants to it. Therefore, it is unnecessary to output it to a too tough card and also it is unnecessary to subject a special processing to make the number secrete, so that the prepaid card can be issued extremely simply and at low cost.

In addition, the construction and practical operation of the system can be simplified by designing the system so that the selection of the type and face value of the prepaid card is completed by reading the barcode on the selection sheet through the barcode reader.

## Claims

1. A prepaid card information issuing system, **characterized by** comprising:
character string storage means for storing a plurality of character strings each consisting of a predetermined number of digits; a selection sheet having bar codes for identifying the type and face value of a prepaid card;
a bar code reader for reading the bar codes and inputting the type and face value of the prepaid card;
paid money inputting means for inputting the amount of paid cash money;
means for generating prepaid card information while some character string in the character string storage means and the face value are associated with each other when the face value of a prepaid card selected and the amount of paid money are coincident with each other;
prepaid card information storage means for storing the prepaid card information; and
means for outputting the prepaid card information.

2. A prepaid card information issuing system, **characterized by** comprising:
character string storage means for storing a plurality of character strings each consisting of a predetermined number of digits;
a selection sheet having bar codes for identifying the type and face value of a prepaid card;
a bar code reader for reading the bar codes and inputting the type and face value of the prepaid card;
credit card information inputting means for inputting information concerning a credit card;
means for transmitting the credit card information and the face value of the prepaid card to an external computer system to request a settlement based on the credit card, and checking whether the settlement based on the credit card has been completed;
means for generating prepaid card information while some character string in the character string storage means and the face value are associated with each other when the settlement based on the credit card has been completed;
prepaid card information storage means for storing the prepaid card information; and
means for outputting the prepaid card information.

3. A call rate settlement system, **characterized by** comprising:
the prepaid card information issuing system having the character string storage means according to claim 1 or 2, the character string storage means storing character strings each containing at least an access number for connecting to an exchange of a specific communication business enterprise;
rate system storage means for storing the rate systems of a communication business enterprise;
a line connecting device for connecting a telephone terminal at a calling side and a telephone terminal at a call reception side;
means for searching the prepaid card information storage means as the character string as a key when the character string concerned and the telephone number of the call reception side are input from the telephone terminal at the calling side, and checking the outstanding amount associated with the character string concerned;
means for connecting the telephone terminal of the calling side and the telephone terminal of the call reception side when the outstanding amount is equal to a predetermined amount or more, and disconnecting the communication path between the calling-side terminal and the call-reception-side terminal at the time point when a call rate calculated by applying the call time between the telephone terminal of the calling side and the telephone terminal of the call reception side to the rate system exceeds the outstanding amount; and
means for reducing the call rate from the outstanding amount.

4. A communication rate settlement system, **characterized by** comprising:
the prepaid card information issuing system according to claim 1 or 2;
rate system storage means for storing the rate system of an Internet connection business enterprise;
a communication connecting device for connecting a user's communication terminal to the Internet;
means for searching the prepaid card information storage means by using the character string as a key when the character string concerned is input through a communication line from the user's communication terminal, and checking the outstanding amount associated with the character string concerned;
means for connecting the user's communication terminal to the Internet when the outstanding amount is equal to a predetermined value or more, and disconnecting the communication terminal from the Internet at the time point when a communication rate calculated by applying the communication time of the communication terminal to the rate system exceeds the outstanding amount; and
means for reducing the communication rate from the outstanding amount.

5. A communication rate settlement system, **characterized by** comprising:
character string storage means for storing a plurality of character strings each consisting of a predetermined number of digits;
means for selectively inputting the type and face value of a prepaid card;
payment money input means for inputting the amount of paid cash money;
means for generating prepaid card information by associating some character string in the character string storage means with the selected face value of the prepaid card when the selected face value is coincident with the paid amount of money;
prepaid card information storage means for storing the prepaid card information;
means for outputting the prepaid card information; rate system storage means for storing the rate system of an Internet connection business enterprise;
a communication connecting device for connecting a user's communication terminal to the Internet;
means for searching the prepaid card information storage means with the character string as a key when the character string concerned is input through a communication line from the user's communication terminal, and checking the outstanding amount associated with the character string concerned;
means for connecting the user's communication terminal to the Internet when the outstanding amount is equal to a predetermined value or more, and disconnecting the communication terminal from the Internet at the time point when a communication rate calculated by applying the communication time of the communication terminal to the rate system exceeds the outstanding amount; and means
for reducing the communication rate from the outstanding amount.

6. A communication rate settlement system, **characterized by** comprising:
character string storage means for storing a plurality of character strings each consisting of a predetermined number of digits;
means for selectively inputting the type and face value of a prepaid card;
credit card information 'input means for inputting information concerning a credit card;
means for transmitting the credit card information and the face value of the prepaid card to an external computer to request a settlement based on the credit card, and checking whether the settlement based on the credit card bas been completed;
means for generating prepaid card information by associating some character string in the character string storage means with the face value when the settlement based on the credit card is completed;
prepaid card information storage means for storing the prepaid card information;
means for outputting the prepaid card information;
rate system storage means for storing the rate system of Internet connection business enterprise;
a communication connecting device for connecting a user's communication terminal to the Internet;
means for searching the prepaid card information storage means with the character string as a key when the character string concerned is input through a communication line from the user's communication terminal, and checking the outstanding amount associated with the character string concerned;
means for connecting the user's communication terminal to the Internet when the outstanding amount is equal to a predetermined value or more, and disconnecting the communication terminal from the Internet at the time point when a communication rate calculated by applying the communication time of the communication terminal to the rate system exceeds the outstanding amount; and
means for reducing the communication rate from the outstanding amount.

7. An expense settlement system, **characterized by** comprising:
the prepaid card information issuing system according to claim 1 or 2;
means for searching the prepaid card information storage means with the character string as a key when an expense settlement request having the character string concerned is transmitted from a communication terminal of an on-line service enterprise, and checking the outstanding amount associated with the character string concerned;
means for comparing the outstanding amount with the expense and determining whether it is possible to make settlement or not; and
means for reducing the money amount corresponding to the expense from the outstanding amount when the settlement can be made.
